# EUROPÄISCHE PATENTANMELDUNG

(11) **EP 0 612 952 A1**
(43) Veröffentlichungstag der Anmeldung: **31.08.1994**
(21) Anmeldenummer: 94102206.3
(22) Anmeldetag: 13.02.1994
(51) Int. Cl.: F16L 37/40

(54) **Schnellverschluss, zum Verbinden von Rohrleitungen für Anlagen zum Foerdern von unter Druck stehendem Gas**

(30) Priorität: 24.02.1993 IT MI930362
(71) Anmelder: FASTER S.r.l., I-20066 Melzo Milano (IT)
(72) Erfinder: Arosio, Massimo, I-26027 Rivolta d'Adda (IT)
(74) Vertreter: Mayer, Hans Benno, Dipl.-Ing.

(57) **Zusammenfassung**

Schnellverschluss (2), zum Verbinden von Rohrleitungen fuer Anlagen zum Foerdern von unter Druck stehenden Gasen oder Fluiden, bestehend aus einem ersten Bauteil (15), das an einem Ende ein vorspringendes Verbindungsstueck (17) aufweist, das mit einem zweiten Bauteil (3), das mit einer Ausnehmung versehen ist, verbindbar ist, wobei im zweiten Bauteil (3) eine gegen die Kraft einer Feder (5) verschiebbare Huelse (7) vorgesehen ist, die an der Vorderseite des Bauteiles (3) eine Verdickung (7a) zur Bildung eines Ventilsitzes aufweist, der mit einem Ventilkoerper (12) zusammenarbeitet, der an seiner, zur Innenseite des Bauteiles (3) hin gerichteten Seite mit einer Platte (14) verbunden ist, die mit einer Huelse (8) verbunden ist, die verschiebbar an einer Feder (6) anliegt und das Verbindungsstueck (17) des ersten Bauteiles (15) auf seiner Umfangsseite eine Nut (16) aufweist, in die die Kugeln (9) eines im Bauteil (3) angeordneten Kugelkranzes bei eingesetztem Teil (15, 17) eindringen und der Kugelkranz (9) von einer durch eine Feder (11) belasteten Betaetigungshuelse (10) mittels eines radial nach innen verformten Bundes (10a) zum Blockieren der Kugeln (9) in der Umfangsnut (16) des eingesetzten Bauteiles (15) abgedeckt ist.

## Beschreibung

Die vorstehende Erfindung betrifft einen Schnellverschluss zum Verbinden von Rohrleitungen fuer Anlagen gewerblicher oder privater Art, zum Foerdern von unter Druck stehendem Gas oder einem anderen Fluid.

Es ist bekannt, dass sich zahlreiche Arten von Schnellverschluessen, z.B. zum Verbinden von Gasleitungen auf dem Markt befinden.

Solche Schnellverschluesse bestehen im allgemeinen aus einem ersten Bauteil, das an einem Ende ein vorspringendes Anschlussteil aufweist, das in ein offenes Endstueck eines zweiten Bauteiles, das eine entsprechende Ausnehmung aufweist, einsetzbar ist.

Ueblicherweise erfolgt das Verbinden der beiden Bauteile des Schnellverschlusses ueber eine bajonettartige Verbindung, wobei das gegenseitige Verriegeln der Bauteile durch Verdrehen einer Ueberwurfmutter oder durch Betaetigen eines Ringes, der einen Bajonettverschluss aufweist, erfolgt.

Derartig ausgebildete Schnellverschluesse weisen erhebliche Nachteile auf.

So ist es z. B. zum Verbinden der beiden Bauteile notwendig, beide Haende einzusetzen, da es erforderlich ist, eine Spann- oder Ueberwurfmutter von Hand zu betaetigen.

Ferner weist ein Bauteil des nicht zusammengefuegten Schnellverschlusses eine tiefe Ausnehmung auf, in der sich Staub und Schmutz ablagern koennen.

Diese Schmutzablagerungen koennen zu Behinderungen beim Zusammenfuegen der Bauteile des Schnellverschlusses fuehren.

Aufgabe der vorstehenden Erfindung ist es, die Unzulaenglichkeiten und Nachteile des Standes der Technik zu vermeiden und einen neuen Schnellverschluss vorzuschlagen, mit dem es moeglich ist, die Verbindung der beiden Bauteile unter Verwendung von nur einer Hand durchzufuehren. Eine weitere Aufgabe der Erfindung besteht darin, einen Schnellverschluss zu schaffen, bei dem das mit einer Ausnehmung versehene Bauteil bei nicht zusammengefuegtem Schnellverschluss eine im wesentlichen ebene Abschlussflaeche aufweist, mit der die Ausnehmung im Inneren des Bauteiles abgedeckt wird.

Eine weitere Aufgabe der Erfindung besteht darin, einen Schnellverschluss vorzuschlagen, mit dem es moeglich ist, einen gefaehrlichen Gasaustritt im Brandfall zu vermeiden.

Des weiteren soll mit der Erfindung ein Schnellverschluss zur Verfuegung gestellt werden, dessen bauliche Merkmale hohe Funktionssicherheit gewaehrleisten und der Schnellverschluss unter Verwendung einfacher Bauteile herstellbar ist.

Mit der Erfindung wird somit ein Schnellverschluss geschaffen, der auch vom wirtschaftlichen Standpunkt her betrachtet einen Fortschritt darstellt.

Die erfindungsgemaessen Aufgaben werden mit einem Schnellverschluss geloest, der besonders zum Verbinden von Rohrleitungen, zum Foerdern von unter Druck stehendem Gas, geeignet ist und ein Bauteile aufweist, das an seinem Ende mit einer Ausnehmung versehen ist, in die ein mit einem Vorsprung versehenes Bauteil einfuehrbar ist und dadurch gekennzeichnet ist, dass das mit einer Ausnehmung versehene Bauteil innenseitig Federmittel aufnimmt, die auf hintereinander geschaltete, verschiebbare Huelsen einwirken und miteinander ueber einen Ventilkoerper und eine Ventilfuehrungsplatte verbunden sind, wobei eine verschiebbare Huelse und die Ventilfuehrungsplatte ueber ein Bauteil wirkverbunden sind, das aus einer Metallegierung mit niedrigem Schmelzpunkt besteht und auf seiner Aussenseite eine Huelse aufnimmt, die axial verschiebbar ist und eine Haltevorrichtung fuer das Bauteil darstellt.

Weitere Merkmale und Vorteile des Erfindungsgegenstandes koennen der folgenden Beschreibung eines bevorzugten Ausfuehrungsbeispieles entnommen werden.

Der Aufbau des Schnellverschlusses gemaess der vorstehenden Erfindung wird nun anhand eines Ausfuehrungsbeispieles in den Zeichnungen dargestellt. Es zeigen:

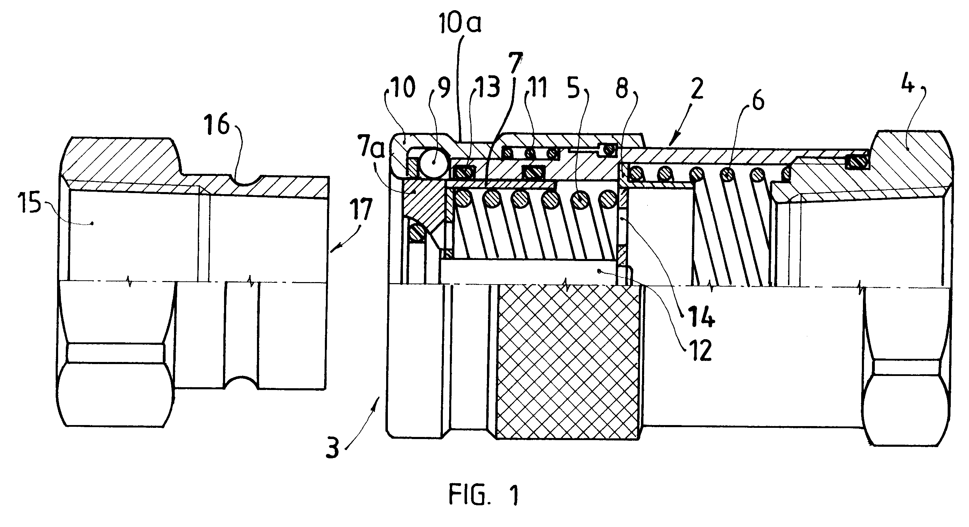

Fig. 1 eine Vorderansicht, teilweise im Schnitt, des erfindungsgemaessen Schnellverschlusses;
Fig. 2 in Vorderansicht, teilweise im Schnitt, den erfindungsgemaessen Schnellverschluss bei Beginn des Zusammenfuegens der zwei Bauteile;
Fig. 3 eine Vorderansicht, teilweise im Schnitt, des erfindungsgemaessen Schnellverschlusses nach erfolgtem Zusammenfuegen;

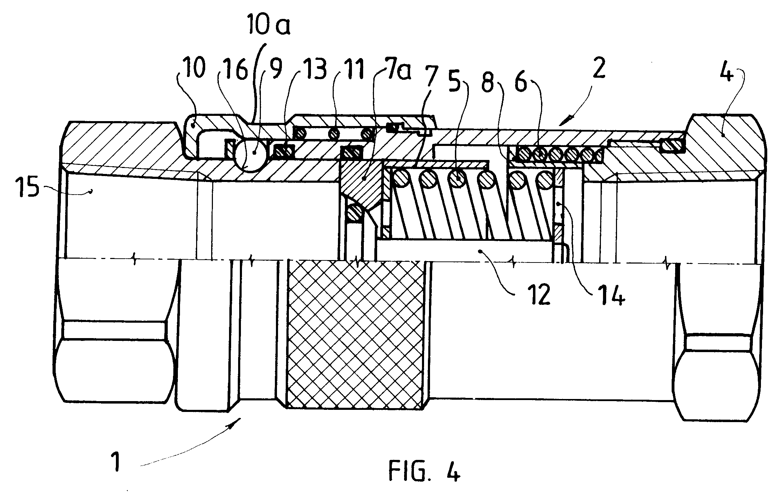

Fig. 4 eine Vorderansicht, teilweise im Schnitt, des erfindungsgemaessen Schnellverschlusses bei Hitzeeinwirkung, z.B. bei Auftreten eines Brandes.

In den Zeichnungen ist der Schnellverschluss zum Verbinden von Leitungen einer, mit unter Druck stehendem Gas oder einem Fluid gefuellten Anlage mit dem Bezugszeichen 1 gekennzeichnet.

Der Schnellverschluss 1 besteht aus einem Bauteil 2, dass an einem Ende eine Ausnehmung 3 aufweist. Am gegenueberliegenden Ende ist das Bauteil 2 mit einem Anschlußstutzen 4 versehen.

Das Bauteil 2 wird ueblicherweise an der Rohranlage befestigt und besteht aus einer Vielzahl von Komponenten. Das Bauteil 2 weist auf seiner Innenseite zwei Federmittel, z.B. schraubenfedern 5 und 6 auf, die bestrebt sind, zwei aus Metall bestehende Schiebehuelse 7 und 8 in einer solchen Lage zu halten, in der die Ausnehmung 3 des Bauteiles 2 durch eine Verdickung 7a der Huelse 7 und einen Ventilkoerper 12 verschlossen wird und eine Ablagerung von Schmutz und Staub in der Ausnehmung 3 vermieden wird.

Die ringfoermige Verdickung 7a ist bestrebt, in ihrer nach vorne gerichteten Stellung einen Kugelkaefig 9a zu verschieben, der in vorteilhafter Weise aus Metall oder einem anderen geeigneten Material gefertigt ist. Die Kugeln 9 des Kaefigs 9a blockieren (bei radial nach aussen verschobener Stellung der Kugeln 9) eine federbelastete Arretierhuelse 10.

Das auf die Huelse 10 einwirkende Federmittel besteht aus einer schraubenfeder 11.

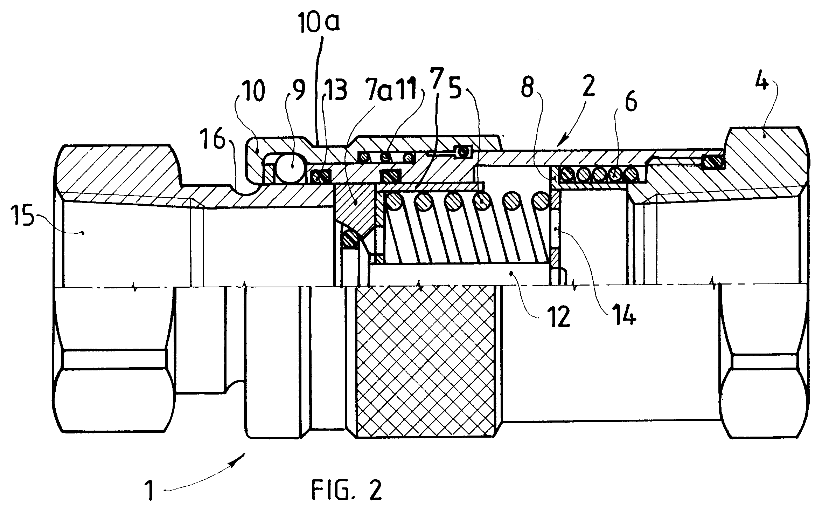

Bei Einfuehren des vom Bauteil 15 abstehenden Verbindungsstueckes 17 in die Ausnehmung 3 des Bauteiles 2, wie in Fig. 2 dargestellt, wird eine Verschiebung der Verdickung 7a in Richtung der Huelse 8 sowie der Platte 14 bewirkt, wobei die Verdickung 7a und die Huelse 8 miteinander ueber eine Fuehrungsplatte 14, die am Ventilkoerper 12 befestigt ist, verbunden sind. Durch Verschieben der Platte 14 erfolgt ein Spannen der Feder 6.

Die Huelse 8 kann bis zum Anschlagen an den Anschlußstutzen 4 verschoben werden. In dieser Stellung tritt das Bauteil 15 mit einem Dichtungsring 13 in Wirkverbindung, um bei dieser Lage des Schnellverschlusses ein Austreten des Gases aus der Rohrleitung zu vermeiden.

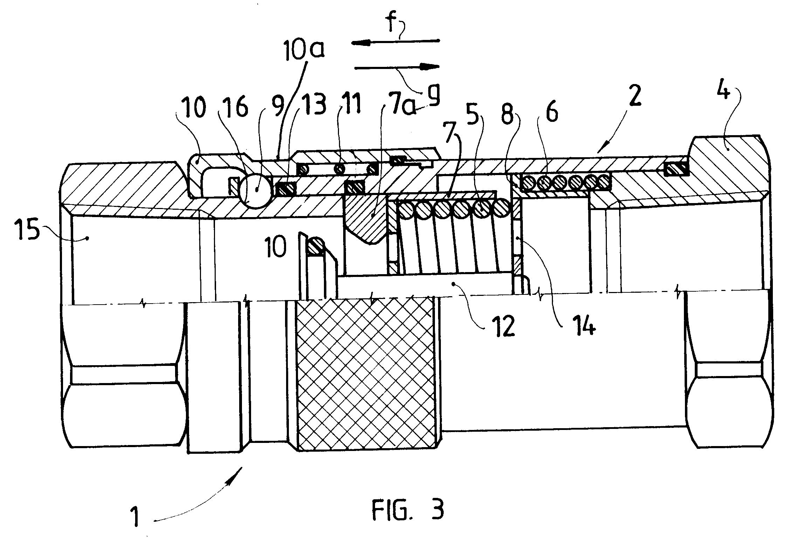

Das allmaehliche Einfuehren des abstehenden Bauteiles 15 in die Ausnehmung 3, wie der Fig. 3 zu entnehmen ist, bewirkt ein Verschieben des Ventilkoerpers 12 gegenueber der rinfoermigen Verdickung 7a und ein allmaehliches Oeffnen des Durchflusses, da ein Verschieben der Verdickung 7a erfolgt.

Die Zusammenfuegebewegung der Bauteile des Schnellverschlusses wird dann unterbrochen, wenn die Nut 16, die am Umfang des Bauteiles 15 angeordnet ist, mit den Kugeln 9 des Kugelkranzes 9a zur Deckung kommt und ein Arretiervorgang hervorgerufen wird. Aufgrund der Schubwirkung der komprimierten Feder 11 wird eine Verschiebebewegung der Huelse 10 (Pfeil f) eingeleitet.

Zum Loesen der Bauteile ist es ausreichend, mit nur einer Hand die Huelse 10 nach rueckwaerts zu verschieben (Pfeil g in Fig. 3), in der Art, dass die Kugeln 9 erneut aus der Nut 16 austreten und unter der Wirkung der Federn 5 und 6 die verschiebbaren Teile 7, 7a und 8 erneut mit dem Ventilkoerper 12 in Wirkverbindung bringt, um dadurch den Fluss des Gasstromes zu unterbrechen.

Ein besonderes Merkmal des erfindungsgemaessen Schnellverschlusses besteht darin, dass die Schiebehuelse 8 und der Ventilkoerper 12 ueber die Platte 14 oder ein anderes Bauteil verbunden sind, und die Platte aus einer Metalllegierung, die einen niedrigen Schmelzpunkt (ungefaehr 100°C) hat, besteht.

Bei starker Hitzeeinwirkung auf Werte von mehr als 100°C, z. B. im Falle eines Brandes, tritt ein Schmelzen dieses Bauteiles 14 und ein Loesen der Verbindung zwischen Ventilkoerper 14 und Huelse 8 sowie eine Freigabe der Feder 5 ein, die ein Zurueckfahren der Fuehrungsplatte 14 zusammen mit dem Ventilkoerper 12 hervorruft.

Dadurch wird der Durchgang des Gases oder des Fluids zwischen dem Ventilkoerper 12 und der ringfoermigen Verdickung 7a, z.B. im Brandfall, automatisch unterbrochen. Dadurch wird zusaetzlich eine hervorragende Brandschutzeinrichtung geschaffen.

## Patentansprüche

1. Schnellverschluss (2), zum Verbinden von Rohrleitungen fuer Anlagen zum Foerdern von unter Druck stehenden Gasen oder Fluiden, bestehend aus einem ersten Bauteil (15), das an einem Ende ein vorspringendes Verbindungsstueck (17) aufweist, das mit einem zweiten Bauteil (3), das mit einer Ausnehmung versehen ist, verbindbar ist, **dadurch gekennzeichnet**, dass im zweiten Bauteil (3) eine gegen die Kraft einer Feder (5) verschiebbare Huelse (7) vorgesehen ist, die an der Vorderseite des Bauteiles (3) eine Verdickung (7a) zur Bildung eines Ventilsitzes aufweist, der mit einem Ventilkoerper (12) zusammenarbeitet, der an seiner, zur Innenseite des Bauteiles (3) hin gerichteten Seite mit einer Platte (14) verbunden ist, die mit einer Huelse (8) verbunden ist, die verschiebbar an einer Feder (6) anliegt und das Verbindungsstueck (17) des ersten Bauteiles (15) auf seiner Umfangsseite eine Nut (16) aufweist, in die die Kugeln (9) eines im Bauteil (3) angeordneten Kugelkranzes bei eingesetztem Teil (15, 17) eindringen und der Kugelkranz (9) von einer durch eine Feder (11) belasteten Betaetigungshuelse (10) mittels eines radial nach innen verformten Bundes (10a) zum Blockieren der Kugeln (9) in der Umfangsnut (16) des eingesetzten Bauteiles (15) abgedeckt ist.

2. Schnellverschluss, nach Patentanspruch 1, **dadurch** **gekennzeichnet**, dass die Verdickung (7a) der Huelse (7) den Kugelkranz (9) bei nicht eingefuegtem Bauteil (17) in radial nach aussen versetzter Stellung haelt und der Kugelkranz (9) die Betaetigungshuelse (10) in Ruhelage haelt.

3. Schnellverschluss, nach Patentanspruch 1 und 2, **dadurch gekennzeichnet**, dass die Betaetigungshuelse (10) von einer Feder (11) in Ruhelage gehalten wird.

4. Schnellverschluss, nach Patentanspruch 1 bis 3, **dadurch gekennzeichnet**, dass im Inneren des Bauteiles (3) Dichtungsringe (13) angeordnet sind.

5. Schnellverschluss nach Patentanspruch 1, **dadurch gekennzeichnet**, dass zwischen der Huelse (7) und der Platte (14) des Ventilkoerpers (12) ein Federmittel (5) angeordnet ist.
